(19) Europäisches Patentamt
European Patent Office
Office européen des brevets

(11) **EP 4 733 162 A1**

(12) **EUROPEAN PATENT APPLICATION**
published in accordance with Art. 153(4) EPC

(43) Date of publication:
**29.04.2026   Bulletin 2026/18**

(21) Application number: **24853391.1**

(22) Date of filing: **28.06.2024**

(51) International Patent Classification (IPC):
*B60T 17/22* *(2006.01)*

(52) Cooperative Patent Classification (CPC):
**B60T 17/22**

(86) International application number:
**PCT/CN2024/102225**

(87) International publication number:
**WO 2025/035976 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **14.08.2023   CN 202311015507**

(71) Applicant: **Dongfeng Motor Group Co., Ltd.**
**Wuhan, Hubei 430056 (CN)**

(72) Inventors:
• **LI, Huaxiang**
  **Wuhan, Hubei 430056 (CN)**

• **YAN, Jie**
  **Wuhan, Hubei 430056 (CN)**
• **WANG, Heng**
  **Wuhan, Hubei 430056 (CN)**
• **CHANG, Zunhui**
  **Wuhan, Hubei 430056 (CN)**
• **LIU, Gao**
  **Wuhan, Hubei 430056 (CN)**

(74) Representative: **Gille Hrabal**
**Partnerschaftsgesellschaft mbB**
**Patentanwälte**
**Brucknerstraße 20**
**40593 Düsseldorf (DE)**

(54) **SELF-DIAGNOSIS METHOD AND DEVICE FOR VEHICLE OCCUPANT PROTECTION SYSTEM**

(57)   The present invention relates to the technical field of vehicle safety. Disclosed are a self-diagnosis method and device for a vehicle occupant protection system. According to the present invention, the real vehicle control parameters are input into an AEB digital twin model, and a virtual second vehicle motion response parameter and a virtual second AEB system response parameter are calculated; the correlation between a real first vehicle motion response parameter and the virtual second vehicle motion response parameter of a vehicle is calculated, and the correlation between a real first AEB system response parameter and the virtual second AEB system response parameter of the vehicle is calculated; and on the basis of the correlations between the real response parameters and the virtual response parameters, it is determined whether an AEB system is abnormal or not. The self-diagnosis function of the AEB system based on digital twin technology is achieved.

Fig. 1

**Description**

**Field of the Invention**

The present invention relates to the technical field of vehicle safety, and in particular to a self-diagnosis method and device for a vehicle occupant protection system.

**Background of the Invention**

The vehicle occupant protection system comprises an autonomous emergency braking (AEB) system and a motorized seat belt (MSB) system. The AEB system can automatically apply braking when the distance between the vehicle and a forward obstacle is less than a safe distance, thereby avoiding a collision; and the MSB system can protect the occupant after a collision occurs. The AEB system and the MSB system jointly function to protect the occupant.
However, the AEB system cannot always provide effective occupant protection. When its safety performance declines, it is necessary to promptly detect this abnormal performance. Therefore, it is necessary in the industry to consider how to detect whether the vehicle AEB system is abnormal.

**Summary of the Invention**

The present invention provides a self-diagnosis method and device for a vehicle occupant protection system, thereby solving the technical problem of how to detect whether the vehicle AEB system is abnormal.
On the one hand, the present invention provides the following technical solution:
a self-diagnosis method for a vehicle occupant protection system, which comprises:

acquiring vehicle control parameters, first vehicle motion response parameters, and first AEB system response parameters within a first duration before the start of each event triggering an AEB function and within a second duration after the end of the event;

inputting the vehicle control parameters into an AEB digital twin model to obtain second vehicle motion response parameters and second AEB system response parameters by calculation;

calculating first correlation coefficients between the first vehicle motion response parameters and the second vehicle motion response parameters, and second correlation coefficients between the first AEB system response parameters and the second AEB system response parameters; and

if both the first correlation coefficients and the second correlation coefficients are greater than the corresponding correlation thresholds, determining that an AEB system is normal; and

if at least one of the first correlation coefficients or the second correlation coefficients is less than the corresponding correlation threshold, determining that the AEB system is abnormal.

Optionally, the vehicle control parameters comprise gear position, steering, vehicle speed, steering wheel angle, and vehicle distance.
Optionally, the first vehicle motion response parameters or the second vehicle motion response parameters comprise relative vehicle distance, relative vehicle speed, and vehicle acceleration.
Optionally, the first AEB system response parameters or the second AEB system response parameters comprise AEB warning and braking pressure.
Optionally, the step of calculating the first correlation coefficients between the first vehicle motion response parameters and the second vehicle motion response parameters, and the second correlation coefficients between the first AEB system response parameters and the second AEB system response parameters comprises:

$$R = 1 - \sqrt{\frac{\sum \max\left(f[n]^2, g[n]^2\right) \cdot \left(1 - \frac{\max\left(0, f(n) \cdot g(n)\right)}{\max\left(f[n]^2, g[n]^2\right)}\right)^2}{\sum \max\left(f[n]^2, g[n]^2\right)}};$$

f[n] represents the first vehicle motion response parameters, g[n] represents the second vehicle motion response parameters, and R represents the first correlation coefficients; or f[n] represents the first AEB system response parameters, $g[n]$ represents the second AEB system response parameters, and $R$ represents the second correlation coefficients.

Optionally, the self-diagnosis method for a vehicle occupant protection system further comprises:

acquiring first MSB system response parameters within the first duration before the start of each event triggering the AEB function and within the second duration after the end of the event;

after calculating the first correlation coefficients between the first vehicle motion response parameters and the second vehicle motion response parameters, and the second correlation coefficients between the first AEB system response parameters and the second AEB system response parameters, further comprising:

inputting the second vehicle motion response parameters into an MSB digital twin model to obtain second MSB system response parameters by calculation if both the first correlation coefficients and the second correlation coefficients are greater than the corresponding correlation thresholds;

calculating third correlation coefficients between the first MSB system response parameters and the second MSB system response parameters;

if the third correlation coefficients are all greater than the corresponding correlation thresholds, determining that a MSB system is normal; and

if at least one of the third correlation coefficients is lower than the corresponding correlation threshold, determining that the MSB system is abnormal.

Optionally, the first MSB system response parameters or the second MSB system response parameters comprise pretension force, pretension timing, and retraction amount.

On the other hand, the present invention further provides the following technical solution: a self-diagnosis device for a vehicle occupant protection system, which comprises:

an acquisition module, which is configured to acquire vehicle control parameters, first vehicle motion response parameters, and first AEB system response parameters within a first duration before the start of each event triggering an AEB function and within a second duration after the end of the event;

a calculation module, which is configured to input the vehicle control parameters into an AEB digital twin model to obtain second vehicle motion response parameters and second AEB system response parameters by calculation; and calculate first correlation coefficients between the first vehicle motion response parameters and the second vehicle motion response parameters, and second correlation coefficients between the first AEB system response parameters and the second AEB system response parameters; and

a decision module, which is configured to determine that an AEB system is normal if both the first correlation coefficients and the second correlation coefficients are greater than the corresponding correlation thresholds; and determine that the AEB system is abnormal if at least one of the first correlation coefficients or the second correlation coefficients is lower than the corresponding correlation threshold.

On the other hand, the present invention further provides the following technical solution: an electronic device, which comprises: a memory, a processor, and a computer program stored on the memory and executable by the processor, and the processor, when executing the program, implements any one of the self-diagnosis methods for a vehicle occupant protection system.

On the other hand, the present invention further provides the following technical solution: a computer-readable storage medium, wherein a computer program stored on the computer-readable storage medium, and the computer program, when executed by a processor, implements any one of the self-diagnosis methods for a vehicle occupant protection system.

One or more technical solutions provided by the present invention achieve at least the following technical effects or advantages:

The present invention inputs the real vehicle control parameters into an AEB digital twin model to obtain virtual second vehicle motion response parameters and second AEB system response parameters by calculation, and calculates the correlations between real first vehicle motion response parameters and the virtual second vehicle motion response parameters of a vehicle, and the correlations between real first AEB system response parameters and the virtual second AEB system response parameters of the vehicle; and on the basis of the correlations between the real response parameters and the virtual response parameters, it is determined whether an AEB system is abnormal or not, thereby realizing the self-diagnosis function of the AEB system based on digital twin technology.

**Brief Description of the Drawings**

In order to better illustrate the technical solutions in the embodiments of the present invention, the following will briefly introduce the drawings needed in the description of the embodiments, and it is obvious that the drawings in the following description are only a part of embodiments of the present invention, for those of ordinary skill in the art, other drawings can also be obtained based on these drawings without any inventive effort.

Fig. 1 is a flowchart of a self-diagnosis method for a vehicle occupant protection system in the embodiment of the present invention; and

Fig. 2 is a schematic diagram of a self-diagnosis device for a vehicle occupant protection system in the embodiment of the present invention.

**Detailed Description of the Embodiments**

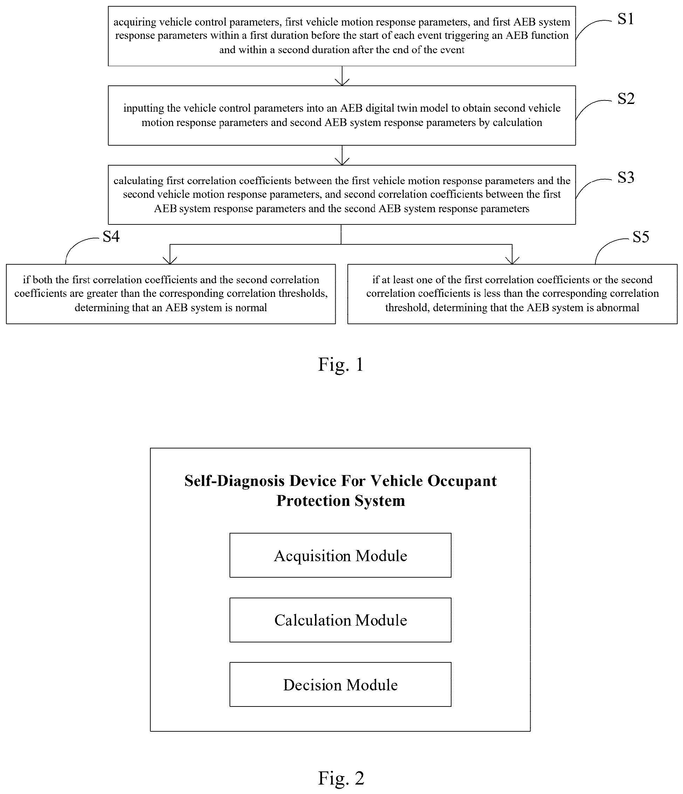

The embodiments of the present invention provides a self-diagnosis method and device for a vehicle occupant protection system, thereby solving the technical problem of how to detect whether the vehicle AEB system is abnormal.
To better understand the technical solutions of the present invention, the technical solutions are described in detail below with reference to the drawings and specific embodiments.
As shown in Fig. 1, the self-diagnosis method for a vehicle occupant protection system in the embodiment comprises:

S1: acquiring vehicle control parameters, first vehicle motion response parameters, and first AEB system response parameters within a first duration before the start of each event triggering an AEB function and within a second duration after the end of the event;

S2: inputting the vehicle control parameters into an AEB digital twin model to obtain second vehicle motion response parameters and second AEB system response parameters by calculation;

S3: calculating first correlation coefficients between the first vehicle motion response parameters and the second vehicle motion response parameters, and second correlation coefficients between the first AEB system response parameters and the second AEB system response parameters;

S4: if both the first correlation coefficients and the second correlation coefficients are greater than the corresponding correlation thresholds, determining that an AEB system is normal; and

S5: if at least one of the first correlation coefficients or the second correlation coefficients is less than the corresponding correlation threshold, determining that the AEB system is abnormal.

In S1, the events triggering the AEB function mainly involve detecting an obstacle in front of the vehicle, the first duration and the second duration can both be 5 seconds, and S1 can acquire the vehicle control parameters, the first vehicle motion response parameters, and the first AEB system response parameters within several seconds before and after the AEB system takes effect. The vehicle control parameters determine the actual vehicle motion state and the AEB system response state within several seconds before and after each activation of the AEB system. The AEB system comprises an AEB environment perception system, an AEB decision system, and an AEB actuator system. The AEB environment perception system perceives the vehicle control parameters, which can comprise gear position, steering, vehicle speed, steering wheel angle, vehicle distance, and the like.
In S2, the AEB digital twin model is a simulation model consistent with the actual vehicle AEB system and can fully simulate the functions of the AEB system, and the accuracy of the AEB digital twin model meets the required standards. The AEB digital twin model comprises an AEB model, an AEB actuator model, and a vehicle dynamics model. The vehicle motion response parameters represent the vehicle motion state within several seconds before and after each activation of the AEB system, and the AEB system response parameters represent the response state of the AEB system within several seconds before and after each activation of the AEB system. The vehicle control parameters determine the vehicle motion state and the response state of the AEB system, that is, the vehicle control parameters determine the second vehicle motion response parameters and the second AEB system response parameters. The first vehicle motion response parameters comprise relative vehicle distance, relative vehicle speed, and vehicle acceleration. The relative vehicle distance refers to the distance of the vehicle relative to the obstacle in front, and the relative vehicle speed refers to the speed of the vehicle relative to the obstacle in front. The second vehicle motion response parameters also comprise relative vehicle distance, relative vehicle speed, and vehicle acceleration. The first AEB system response parameters comprise AEB warning and braking pressure. The second AEB system response parameters also comprise AEB warning and braking pressure. The first vehicle motion response parameters and the first AEB system response parameters are real response signals of the vehicle, and the second vehicle motion response parameters and the second AEB system response parameters are simulated response signals obtained from the simulation.

It can be understood that if the safety performance of the vehicle AEB system has not degraded, the correlations between the second vehicle motion response parameters and the first vehicle motion response parameters should be high, and the correlations between the second AEB system response parameters and the first AEB system response parameters should also be high; and if the correlations between the second vehicle motion response parameters and the first vehicle motion response parameters, or the correlations between the second AEB system response parameters and the first AEB system response parameters, are low, the safety performance of the AEB system is considered to have degraded, and the AEB system is determined to be abnormal. S3 provides correlation coefficients representing the correlations, and S3 can comprise:

$$R = 1 - \sqrt{\frac{\sum \max\left(f[n]^2, g[n]^2\right) \cdot \left(1 - \frac{\max\left(0, f(n) \cdot g(n)\right)}{\max\left(f[n]^2, g[n]^2\right)}\right)^2}{\sum \max\left(f[n]^2, g[n]^2\right)}};$$

$f[n]$ represents the first vehicle motion response parameters, $g[n]$ represents the second vehicle motion response parameters, and $R$ represents the first correlation coefficients; or $f[n]$ represents the first AEB system response parameters, $g[n]$ represents the second AEB system response parameters, and $R$ represents the second correlation coefficients. Specifically, when $f[n]$ represents relative vehicle distance and $g[n]$ represents relative vehicle distance, the resulting first correlation coefficient $R$ is the correlation coefficient of the relative vehicle distance; when $f[n]$ represents relative vehicle speed and $g[n]$ represents relative vehicle speed, the resulting first correlation coefficient $R$ is the correlation coefficient of the relative vehicle speed; when $f[n]$ represents vehicle acceleration and $g[n]$ represents vehicle acceleration, the resulting first correlation coefficient $R$ is the correlation coefficient of the vehicle acceleration; when $f[n]$ represents AEB warning and $g[n]$ represents AEB warning, the resulting second correlation coefficient $R$ is the correlation coefficient of the AEB warning; and when $f[n]$ represents braking pressure and $g[n]$ represents braking pressure, the resulting second correlation coefficient $R$ is the correlation coefficient of the braking pressure.

For the correlation thresholds in S4 and S5, the correlation thresholds corresponding to relative vehicle distance, relative vehicle speed, vehicle acceleration, AEB warning, and braking pressure can be 0.95, 0.90, 0.85, 0.95, and 0.90, respectively.

As described above, the embodiment of the present invention inputs the real vehicle control parameters into an AEB digital twin model to obtain virtual second vehicle motion response parameters and second AEB system response parameters by calculation, and calculate the correlations between real first vehicle motion response parameters and the virtual second vehicle motion response parameters of a vehicle, and the correlations between real first AEB system response parameters and the virtual second AEB system response parameters of the vehicle; and on the basis of the correlations between the real response parameters and the virtual response parameters, it is determined whether an AEB system is abnormal or not, thereby realizing the self-diagnosis function of the AEB system based on digital twin technology.

As mentioned above, the vehicle occupant protection system comprises the AEB system and the MSB system. Similarly, the MSB system does not always provide optimal occupant protection. When the safety performance of the MSB system degrades, it is necessary to promptly detect this performance degradation. Therefore, the self-diagnosis method for a vehicle occupant protection system in the embodiment of the present invention can further comprise:

first MSB system response parameters are acquired within the first duration before the start of each event triggering the AEB function and within the second duration after the end of the event; and

after S3, the self-diagnosis method for a vehicle occupant protection system further comprises: the second vehicle motion response parameters are input into an MSB digital twin model to obtain second MSB system response parameters by calculation if both the first correlation coefficients and the second correlation coefficients are greater than the corresponding correlation thresholds; third correlation coefficients between the first MSB system response parameters and the second MSB system response parameters are calculated; if the third correlation coefficients are all greater than the corresponding correlation thresholds, the MSB system is determined to be normal; and if at least one of the third correlation coefficients is lower than the corresponding correlation threshold, the MSB system is determined to be abnormal.

The MSB digital twin model is a simulation model consistent with the actual vehicle MSB system and can fully simulate the functions of the MSB system. The MSB digital twin model comprises an MSB model, an MSB actuator model, and a vehicle and occupant motion model. The MSB system response parameters represent the response state of the MSB system within a few seconds before and after each activation of the MSB system, and the vehicle motion state determines the response state of the MSB system, that is, the second vehicle motion response parameters determine the second MSB system response parameters. Therefore, inputting the second vehicle motion response parameters into the MSB digital twin model can simulate and obtain virtual second MSB system response parameters. The first MSB system response parameters comprise pretension force, pretension timing, and retraction amount. Therefore, the second MSB system response parameters also comprise pretension force, pretension timing, and retraction amount.

It can be understood that if the safety performance of the MSB system does not degrade, the correlations between the second MSB system response parameters and the first MSB system response parameters should be high. Conversely, if the correlations between the second MSB system response parameters and the first MSB system response parameters are low, the safety performance of the MSB system is considered to have degraded, and the MSB system is determined to be abnormal. The correlation coefficients are configured to represent the correlations, and the third correlation coefficients are calculated using the same formula as in S3. When $f[n]$ represents pretension force and $g[n]$ represents pretension force, the resulting third correlation coefficient $R$ represents the correlation coefficient of the pretension force; when $f[n]$ represents pretension timing and $g[n]$ represents pretension timing, the resulting third correlation coefficient $R$ represents the correlation coefficient of the pretension timing; and when $f[n]$ represents retraction amount and $g[n]$ represents retraction amount, the resulting third correlation coefficient $R$ represents the correlation coefficient of the retraction amount.

As shown in Fig. 2, the embodiment of the present invention further provides a self-diagnosis device for a vehicle occupant protection system, which comprises:

an acquisition module, which is configured to acquire vehicle control parameters, first vehicle motion response parameters, and first AEB system response parameters within a first duration before the start of each event triggering an AEB function and within a second duration after the end of the event;

a calculation module, which is configured to input the vehicle control parameters into an AEB digital twin model to obtain second vehicle motion response parameters and second AEB system response parameters by calculation; and calculate first correlation coefficients between the first vehicle motion response parameters and the second vehicle motion response parameters, and second correlation coefficients between the first AEB system response parameters and the second AEB system response parameters; and

a decision module, which is configured to determine that an AEB system is normal if both the first correlation coefficients and the second correlation coefficients are greater than the corresponding correlation thresholds; and determine that the AEB system is abnormal if at least one of the first correlation coefficients or the second correlation coefficients is lower than the corresponding correlation threshold.

Further, the acquisition module can also be configured to acquire first MSB system response parameters within the first duration before the start of each event triggering the AEB function and within the second duration after the end of the event;

the calculation module can also be configured to input the second vehicle motion response parameters into an MSB digital twin model to obtain second MSB system response parameters by calculation if both the first correlation coefficients and the second correlation coefficients are greater than the corresponding correlation thresholds; calculate third correlation coefficients between the first MSB system response parameters and the second MSB system response parameters;

the decision module can also be configured to determine that the MSB system is normal if the third correlation coefficients are all greater than the corresponding correlation thresholds; and determine that the MSB system is abnormal if at least one of the third correlation coefficients is lower than the corresponding correlation threshold.

Based on the same inventive concept as the self-diagnosis method for a vehicle occupant protection system described above, the embodiment of the present invention further provides an electronic device, which comprises a memory, a processor, and a computer program stored on the memory and executable by the processor, and the processor, when executing the program, implements any step of the self-diagnosis method for a vehicle occupant protection system described above.

A bus architecture (represented by a bus) is provided, and the bus can comprise any number of interconnected buses and bridges, linking together various circuits of one or more processors represented by the processor and memories represented by the memory. The bus can further link various other circuits, such as peripheral devices, voltage regulators, and power management circuits, which are well known in the art, and thus will not be described in further detail herein. A bus interface provides an interface between the bus and a receiver and a transmitter. The receiver and the transmitter can be the same component, namely a transceiver, providing units for communication with various other devices over a transmission medium. The processor is configured to manage the bus and perform general processing, and the memory can be configured to store data used by the processor during operation.

Since the electronic device described in the embodiment of the present invention is the electronic device configured to implement the self-diagnosis method for a vehicle occupant protection system, those skilled in the art can understand the specific embodiments of the electronic device and various modifications thereof based on the self-diagnosis method for a vehicle occupant protection system described herein. Therefore, details of how the electronic device implements the method in the embodiment of the present invention are not further described herein. Any electronic device used by those skilled in the art to implement the self-diagnosis method for a vehicle occupant protection system in the embodiment of the present invention falls within the scope of the present invention to be protected.

Based on the same inventive concept as the above self-diagnosis method for a vehicle occupant protection system, the present invention further provides a computer-readable storage medium, on which a computer program is stored, and the computer program, when executed by a processor, implements any one of the above self-diagnosis methods for a vehicle occupant protection system.

Those skilled in the art should understand that the embodiments of the present invention can be provided as methods, systems, or computer program products. Therefore, the present invention can adopt the form of a complete hardware embodiment, a complete software embodiment, or an embodiment combining software and hardware. Furthermore, the present invention can be in the form of a computer program product implemented in one or more computer available storage media (comprising but not limited to disk memory, CD-ROM and optical memory, etc.) with computer available program codes.

The present invention is described with reference to flowcharts and/or block diagrams of methods, devices (systems), and computer program products in embodiments of the present invention. It should be understood that each flow and/or block in a flow diagram and/or block diagram, as well as the combination of the flow and/or box in the flow diagram and/or block diagram, can be implemented by computer program instructions. These computer program instructions can be provided to a general-purpose computer, a special-purpose computer, an embedded processor, or other programmable data processing equipment so as to generate a machine, so that the instructions executed by the computer or other programmable data processing equipment are caused to generate a device for implementing the functions specified in one or more processes in the flowchart and/or one or more blocks in the block diagram.

These computer program instructions can also be stored in a computer readable memory capable of directing a computer or other programmable data processing devices to work in a particular manner, so that the instructions stored in the computer readable memory produce an article of manufacture comprising a command device. The command device implements the functions specified in one or more flows in the flow diagram and/or one or more blocks in the block diagram.

These computer program instructions can also be loaded onto a computer or other programmable data processing device, so that a series of steps are executed on the computer or other programmable equipment to produce computer-implemented processing, thus, the instructions executed on the computer or other programmable devices provide steps for implementing the functions specified in one or more flows in the flow diagram and/or one or more blocks in the block diagram.

Even though the preferred embodiments of the present invention have been described, those skilled in the art, once aware of the underlying inventive concept, can make various modifications and changes to these embodiments. Therefore, the appended claims are intended to be construed to comprise the preferred embodiments as well as all modifications and variations that fall within the scope of the present invention.

Obviously, those skilled in the art can make various modifications and variations to the present invention without departing from the spirit and scope of the present invention. Thus, in the event that these modifications and variations of the present invention are within the protection scope of the claims and the equivalents thereof, the present invention also intends to comprise such modifications and variations.

**Claims**

1. A self-diagnosis method for a vehicle occupant protection system, comprising:

acquiring vehicle control parameters, first vehicle motion response parameters, and first AEB system response parameters within a first duration before the start of each event triggering an AEB function and within a second duration after the end of the event;

inputting the vehicle control parameters into an AEB digital twin model to obtain second vehicle motion response parameters and second AEB system response parameters by calculation;

calculating first correlation coefficients between the first vehicle motion response parameters and the second vehicle motion response parameters, and second correlation coefficients between the first AEB system response parameters and the second AEB system response parameters;

if both the first correlation coefficients and the second correlation coefficients are greater than the corresponding correlation thresholds, determining that an AEB system is normal; and

if at least one of the first correlation coefficients or the second correlation coefficients is less than the corresponding correlation threshold, determining that the AEB system is abnormal.

2. The self-diagnosis method for a vehicle occupant protection system according to claim 1, wherein the vehicle control parameters comprise gear position, steering, vehicle speed, steering wheel angle, and vehicle distance.

3. The self-diagnosis method for a vehicle occupant protection system according to claim 1, wherein the first vehicle motion response parameters or the second vehicle motion response parameters comprise relative vehicle distance, relative vehicle speed, and vehicle acceleration.

4. The self-diagnosis method for a vehicle occupant protection system according to claim 1, wherein the first AEB system response parameters or the second AEB system response parameters comprise AEB warning and braking pressure.

5. The self-diagnosis method for a vehicle occupant protection system according to claim 1, wherein the step of calculating the first correlation coefficients between the first vehicle motion response parameters and the second vehicle motion response parameters, and the second correlation coefficients between the first AEB system response parameters and the second AEB system response parameters comprises:

$$R = 1- \sqrt{\frac{\sum \max (f[n]^2, g[n]^2) \cdot \left(1 - \frac{\max (0, f(n) \cdot g(n))}{\max (f[n]^2, g[n]^2)}\right)^2}{\sum \max (f[n]^2, g[n]^2)}};$$

$f[n]$ represents the first vehicle motion response parameters, $g[n]$ represents the second vehicle motion response parameters, and $R$ represents the first correlation coefficients; or $f[n]$ represents the first AEB system response parameters, $g[n]$ represents the second AEB system response parameters, and $R$ represents the second correlation coefficients.

6. The self-diagnosis method for a vehicle occupant protection system according to claim 1, wherein the method further comprises:

acquiring first MSB system response parameters within the first duration before the start of each event triggering the AEB function and within the second duration after the end of the event;

after calculating the first correlation coefficients between the first vehicle motion response parameters and the second vehicle motion response parameters, and the second correlation coefficients between the first AEB system response parameters and the second AEB system response parameters, further comprising:

inputting the second vehicle motion response parameters into an MSB digital twin model to obtain second MSB system response parameters by calculation if both the first correlation coefficients and the second correlation coefficients are greater than the corresponding correlation thresholds;

calculating third correlation coefficients between the first MSB system response parameters and the second MSB system response parameters;

if the third correlation coefficients are all greater than the corresponding correlation thresholds, determining that a MSB system is normal; and

if at least one of the third correlation coefficients is lower than the corresponding correlation threshold, determining that the MSB system is abnormal.

7. The self-diagnosis method for a vehicle occupant protection system according to claim 6, wherein the first MSB system response parameters or the second MSB system response parameters comprise pretension force, pretension timing, and retraction amount.

8. A self-diagnosis device for a vehicle occupant protection system, comprising:

an acquisition module, which is configured to acquire vehicle control parameters, first vehicle motion response parameters, and first AEB system response parameters within a first duration before the start of each event triggering an AEB function and within a second duration after the end of the event;

a calculation module, which is configured to input the vehicle control parameters into an AEB digital twin model to obtain second vehicle motion response parameters and second AEB system response parameters by calculation; and calculate first correlation coefficients between the first vehicle motion response parameters and the second vehicle motion response parameters, and second correlation coefficients between the first AEB system response parameters and the second AEB system response parameters; and

a decision module, which is configured to determine that an AEB system is normal if both the first correlation coefficients and the second correlation coefficients are greater than the corresponding correlation thresholds; and determine that the AEB system is abnormal if at least one of the first correlation coefficients or the second correlation coefficients is lower than the corresponding correlation threshold.

9. An electronic device, comprising: a memory, a processor, and a computer program stored on the memory and executable by the processor, and the processor, when executing the program, implements the self-diagnosis method for a vehicle occupant protection system according to any one of claims 1 to 7.

10. A computer-readable storage medium, wherein a computer program is stored on the computer-readable storage medium, and the computer program, when executed by a processor, implements the self-diagnosis method for a vehicle occupant protection system according to any one of claims 1 to 7.

| acquiring vehicle control parameters, first vehicle motion response parameters, and first AEB system response parameters within a first duration before the start of each event triggering an AEB function and within a second duration after the end of the event | S1 |

| inputting the vehicle control parameters into an AEB digital twin model to obtain second vehicle motion response parameters and second AEB system response parameters by calculation | S2 |

| calculating first correlation coefficients between the first vehicle motion response parameters and the second vehicle motion response parameters, and second correlation coefficients between the first AEB system response parameters and the second AEB system response parameters | S3 |

S4

| if both the first correlation coefficients and the second correlation coefficients are greater than the corresponding correlation thresholds, determining that an AEB system is normal |

S5

| if at least one of the first correlation coefficients or the second correlation coefficients is less than the corresponding correlation threshold, determining that the AEB system is abnormal |

Fig. 1

**Self-Diagnosis Device For Vehicle Occupant Protection System**

Acquisition Module

Calculation Module

Decision Module

Fig. 2

## INTERNATIONAL SEARCH REPORT

| International application No. |
| --- |
| **PCT/CN2024/102225** |

### A. CLASSIFICATION OF SUBJECT MATTER

B60T17/22(2006.01)i

According to International Patent Classification (IPC) or to both national classification and IPC

### B. FIELDS SEARCHED

Minimum documentation searched (classification system followed by classification symbols)

IPC: B60T,B60W,G05B,G06F

Documentation searched other than minimum documentation to the extent that such documents are included in the fields searched

Electronic data base consulted during the international search (name of data base and, where practicable, search terms used)

CNTXT, ENTXTC, VEN, CNKI: 东风汽车集团股份有限公司, AEB, 自动紧急制动, 数字, 模型, 神经网络, 仿真, 测试, 响应, 碰撞, 异常, 故障, 正常, 比对, 对比, 相关性, 比较, 参数, 状态, 信息, 车距, 距离, 车速, 速度, 第二; emergency, brak+, neural w network, model, parameter, compare, correspond+, response, diagnosis, velocity, speed, distance

### C. DOCUMENTS CONSIDERED TO BE RELEVANT

| Category* | Citation of document, with indication, where appropriate, of the relevant passages | Relevant to claim No. |
| --- | --- | --- |
| PX | CN 117184030 A (DONGFENG MOTOR GROUP CO., LTD.) 08 December 2023 (2023-12-08)<br>claims 1-10 | 1-10 |
| PX | CN 117195693 A (DONGFENG MOTOR GROUP CO., LTD.) 08 December 2023 (2023-12-08)<br>description, paragraphs 4-66 | 1-5, 8-10 |
| A | CN 116520805 A (CHONGQING CHANG'AN AUTOMOBILE CO., LTD.) 01 August 2023 (2023-08-01)<br>description, paragraphs 80-137, and figures 1-4 | 1-10 |
| A | CN 106934139 A (BEIJING JINGWEI HIRAIN TECHNOLOGIES CO., LTD.) 07 July 2017 (2017-07-07)<br>entire document | 1-10 |
| A | CN 111907492 A (DONGGUAN ZHENGYANG ELECTRONIC MECHANICAL LTD.) 10 November 2020 (2020-11-10)<br>entire document | 1-10 |

| ✓ Further documents are listed in the continuation of Box C. | ✓ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **18 September 2024** | **24 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/102225**

### C.   DOCUMENTS CONSIDERED TO BE RELEVANT

| Category* | Citation of document, with indication, where appropriate, of the relevant passages | Relevant to claim No. |
|---|---|---|
| A | CN 113050455 A (SHANGHAI AI NEV INNOVATIVE PLATFORM CO., LTD.) 29 June 2021 (2021-06-29) entire document | 1-10 |
| A | CN 114967499 A (CHINA FAW CO., LTD.) 30 August 2022 (2022-08-30) entire document | 1-10 |
| A | US 2018370502 A1 (DURA OPERATING L.L.C.) 27 December 2018 (2018-12-27) entire document | 1-10 |
| A | US 2021331655 A1 (LG ELECTRONICS INC.) 28 October 2021 (2021-10-28) entire document | 1-10 |

Form PCT/ISA/210 (second sheet) (July 2022)

**INTERNATIONAL SEARCH REPORT**
Information on patent family members

International application No.

**PCT/CN2024/102225**

| Patent document cited in search report | | | Publication date (day/month/year) | Patent family member(s) | | | Publication date (day/month/year) |
|---|---|---|---|---|---|---|---|
| CN | 117184030 | A | 08 December 2023 | None | | | |
| CN | 117195693 | A | 08 December 2023 | None | | | |
| CN | 116520805 | A | 01 August 2023 | None | | | |
| CN | 106934139 | A | 07 July 2017 | None | | | |
| CN | 111907492 | A | 10 November 2020 | None | | | |
| CN | 113050455 | A | 29 June 2021 | None | | | |
| CN | 114967499 | A | 30 August 2022 | None | | | |
| US | 2018370502 | A1 | 27 December 2018 | None | | | |
| US | 2021331655 | A1 | 28 October 2021 | WO | 2021006374 | A1 | 14 January 2021 |
| | | | | KR | 20190105213 | A | 16 September 2019 |

Form PCT/ISA/210 (patent family annex) (July 2022)